# EUROPÄISCHE PATENTANMELDUNG

(11) **EP 0 018 537 A1**
(43) Veröffentlichungstag der Anmeldung: **12.11.1980**
(21) Anmeldenummer: 80102010.8
(22) Anmeldetag: 15.04.1980
(51) Int. Cl.: B41M 5/12, C09B 11/26

(54) **Druck- und wärmeempfindliches Aufzeichnungsmaterial**

(30) Priorität: 27.04.1979 DE 2917271
(71) Anmelder: BAYER AG, 51368 Leverkusen (DE)
(72) Erfinder: Psaar, Hubertus, Dr., D-5090 Leverkusen (DE); Kühlthau, Hans-Peter, Dr., D-5090 Leverkusen 1 (DE); Raue, Roderich, Dr., D-5090 Leverkusen 1 (DE)

(57) **Zusammenfassung**

Ein druck- und wärmeempfindliches Aufzeichnungsmaterial enthältals Farbbildner mindestens eine Verbindung der Formel 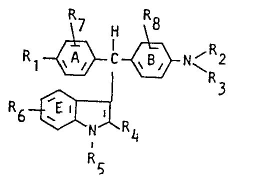 worin
R₁ Wasserstoff, Hydroxy, C₁- bis C₆-Alkoxy, C₂- bis C₆-Alkenyloxy, Cyclohexyloxy, Cyclopentyloxy, gegebenenfalls durch C₁- bis C₄-Alkyl, C₁- bis C₄-Alkoxy oder Halogen substituiertes Benzyloxy, Phenyläthyloxy, Phenyloxy, Naphthyloxy, Phenylthio oder Naphthylthio, C₁- bis C₆-Alkylthio,
R₂ und R₃ unabhängig voneinander Wasserstoff, gegebenenfalls durch C₁- bis C₄-Alkoxy, C₁-bis C₄-Alkyl- carbonyloxy, Hydroxy, Halogen oder Cyan substituiertes C₁- bis C₆-Alkyl, gegebenenfalls durch C₁- bis C₄-Alkyl, C₁- bis C₄-Alkoxy oder Halogen substituiertes Benzyl, Phenyläthyl, Phenyl oder Naphthyl, Cyclopentyl oder Cyclohexyl oder
R₂ und R₃ zusammen mit dem Stickstoffatom einen Pyrrolidin-, Pyrazolin-, Piperidin- oder Morpholinring oder
R₂ zusammen mit dem Stickstoffatom und dem Ring B einen Indolin- oder Tetrahydrochinolinring, wobei die genannten Ringe durch Methyl oder Phenyl substituiert sein können,
R, C,- bis C₄-Alkyl oder Phenyl,
R₅ Wasserstoff, gegebenenfalls durch Cyan, Chlor oder Hydroxy substituiertes C₁- bis C₂₂-Alkyl, C₂- bis C₄-Alkenyl, Cyclohexyl, gegebenenfalls durch Methyl, Äthyl, Methoxy, Äthoxy oder Chlor substituiertes Phenyl oder Benzyl,
R₆, R₇ und Rₛ unabhängig voneinander Wasserstoff, Methyl. Äthyl, Methoxy, Äthoxy oder Chlor bedeuten.

## Beschreibung

Die vorliegende Erfindung betrifft ein druck- und wärmeempfindliches Aufzeichnungsmaterial, welches als Farbbildner mindestens eine Verbindung der Formel 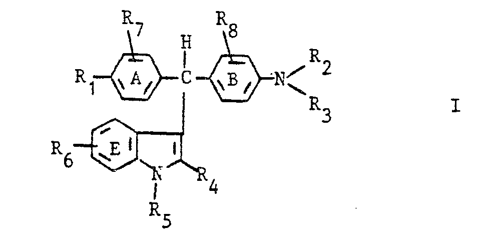 enthält. In Formel I bedeuten:
R₁ Wasserstoff, Hydroxy, C₁- bis C₆-Alkoxy, C₂- bis C₆-Alke- nyloxy, Cyclohexyloxy, Cyclopentyloxy, gegebenenfalls durch C₁- bis C₄-Alkyl, C₁- bis C₄-Alkoxy oder Halogen substituiertes Benzyloxy, Phenyläthyloxy, Phenyloxy, Naphthyloxy, Phenylthio oder Naphthylthio, C₁- bis C₆-Alkyl- thio,
R und R₃ unabhängig voneinander Wasserstoff, gegebenenfalls durch C₁- bis C₄-Alkoxy, C₁- bis C₄-klkylcarbonyloxy, Hydroxy; Halogen oder Cyan substituiertes C₁- bis C₆-Alkyl, gegebenenfalls durch C₁- bis C₄-Alkyl, C₁- bis C₄-Alkoxy oder Halogen substituiertes Benzyl, Phenyläthyl, Phenyl oder Naphthyl, Cyclopentyl oder Cyclohexyl oder
R₂ und R₃ zusammen mit dem Stickstoffatom einen Pyrrolidin-, Pyrazolin-,Piperidin- oder Morpholinring oder
R₂ zusammen mit dem Stickstoffatom und dem Ring B einen Indolin- oder Tetrahydrochinolinring, wobei die genannten Ringe durch Methyl oder Phenyl substituiert sein können,
^{R}₄ ^{C}₁- bis C₄- Alkyl oder Phenyl,
R₅ Wasserstoff, gegebenenfalls durch Cyan, Chlor oder Hydroxy substituiertes C₁- bis C₂₂-Alkyl, C₂- bis C₄-Alkenyl, Cyclohexyl, gegebenenfalls durch Methyl, Äthyl, Methoxy, Äthoxy oder Chlor substituiertes Phenyl oder Benzyl,
R₆, R₇ und R₈ unabhängig voneinander Wasserstoff, Methyl, Äthyl, Methoxy, Äthoxy oder Chlor.

Von besonderem Interesse sind Farbbildner der Formel 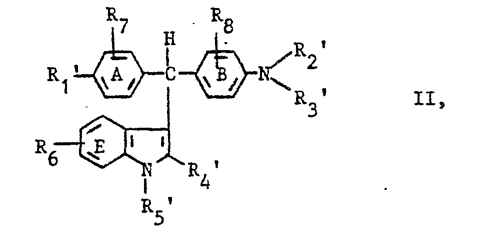 worin
R₁' für Methylwasserstoff, Phenoxy, Benzyloxy, C₂- bis C₄-Alkoxy oder besonders bevorzugt Methoxy steht,
R₂' und R₃' unabhängig voneinander Wasserstoff, C₁- bis C₄- Alkyl, Cyanäthyl, Hydroxyäthyl, Acetoxyäthyl, C₁- bis C₄-Alk- oxyäthyl, gegebenenfalls durch Methyl, Äthyl, Methoxy oder Äthoxy substituiertes Benzyl oder Phenyl bedeuten oder
R₂' und R₃' zusammen mit dem Stickstoffatom einen gegebenenfalls durch Methyl und/oder Phenyl substituierten Pyrrolidin-, Piperidin-,Morpholin-, Pyrazolin- oder Piperazinring bilden,
^{R}₄' für Methyl, Äthyl oder Phenyl und
R₅' für Wasserstoff oder C₁- bis C₄-Alkyl stehen und
^{R}₆, R₇ und R₈ die gleiche Bedeutung wie in Formel I haben.

Die Leukoverbindungen der Formel I sind bekannt oder lassen sich nach bekannten Verfahren herstellen. Sie sind eine neue Gruppe von Farbbildnernfür druck- oder wärmeempfindliche Aufzeichnungsmaterialien. Die Leukoverbindungen werden entweder durch direkte Synthese, wie sie in der DE-OS 1 670 846 beschrieben wird, oder aus den entsprechenden Farbsalzen durch Reduktion gewonnen.

Geeignete Farbsalze und Verfahren zu deren Herstellung werden in der DE-AS 1 619 484 beschrieben.

Die farblosen Verbindungen der Formel I entwickeln sich - auf saure Schichten aufgebracht - an der Luft oder mit Oxidationsmitteln zu violetten, blauen, grünen oder schwarzen Farbstoffen, die sehr gut lichtecht sind. Die Leukoverbindungen können einzeln oder in Mischungen mit anderen, auch bekannten Farbbildnern angewendet werden.

Reaktionsdurchschreibepapiere sind bekannt (vgl. M. Gutcho, Capsule Technology and Microencapsulation, Noyes Data Corporation, 1972, Seiten 242 - 277; G. Baxter in Microencapsulation, Processes and Appli- cations,herausgegeben von J. E. Vandegaer, Plenum Press, New York, London, Seiten 127 - 143).

Entscheidend für die Qualität der Reaktionsdurchschreibepapiere sind die Mikrokapseln, in denen der Farbbildner in Form einer Lösung eingelagert ist. Die Kapselhülle muß sehr dicht für die Farbbildner-Lösung sein, so daß das Lösungsmittel nicht verdampft, sonst wird die Lagerfähigkeit des Papiers herabgesetzt. Andererseits müssen die Hüllen unter dem Druck des Schreibgerätes leicht zerbrechen und dürfen nicht zu dick sein.

Mikrokapseln für Reaktionsdurchschreibepapiere müssen demnach möglichst dicht und für Farbbildner und Lösungsmittel undurchlässig, jedoch gleichzeitig genügend druckempfindlich sein.

Zur Herstellung von Mikrokapseln für Reaktionsdurchschreibepapiere sind u. a. Verfahren zur Phasentrennung und zur Phasengrenzflächenpolymerisation beschrieben worden (vgl. DE-AS 1 122 495).

Kapselwandbildungskomponenten sind ebenfalls in großer Zahl angegeben, beispielsweise die Kombination bestimmter ausgewählter Diisocyanate und Wasser, Diol oder Diamin (vgl. DE-OS 2 311 712).

Zur Herstellung der Mikrokapseln kann man zunächst das Diisocyanat und die Farbstoffvorstufe in Lösungsmitteln lösen und diese organische Phase in einer wäßrigen, die gegebenenfalls auch Schutzkolloide enthalten kann, emulgieren. Zu dieser Emulsion gibt man dann die wäßrige Diaminlösung in stöchiometrischer Menge.

Zur Emulgierung und Stabilisierung der gebildeten Emulsion werden der wäßrigen Phase Schutzkolloide und Emulgierhilfsmittel zugesetzt. Beispiele für solche als Schutzkolloide wirkende Produkte sind Carboxymethylcellulose, Gelatine und Polyvinylalkohol.

Beispiele für Emulgatoren sind oxäthyliertes 3-Benzylhydroxybiphenyl, Umsetzungsprodukte von Nonylphenol mit unterschiedlichen Mengen Äthylenoxid und Sorbitanfettsäureester.

Die Mikrokapseln können kontinuierlich oder diskontinuierlich hergestellt werden: Man verwendet im allgemeinen Dispergiergeräte, die ein Schergefälle erzeugen. Beispiele hierfür sind Blatt-, Korb- Schnellrührer, Kolloidmühle,Homogenisatoren,Ultraschalldispergatoren,Düsen,Strahldüsen, Supratonmaschinen. Die Stärke der Turbulenz beim Vermischen ist in erster Linie bestimmend für den Durchmesser der erhaltenen Mikrok.apseln. Kapseln in der Größe von 1 bis 2 000 pm können hergestellt werden. Bevorzugt sind Kapseln mit Durchmessern von 2 bis 20 um. Die Kapseln agglomerieren nicht und haben eine enge Teilchengrößenverteilung. Das Gewichtsverhältnis von Kernmaterial zu Hülsenmaterial ist 50 - 90 zu 50 - 10. Am Ende der Kapselherstellung wird mindestens 2 Stunden bei 60 - 70°C getempert.

Druckempfindliche Durchschreibepapiere können aus den Kapseln in bekannter Weise hergestellt werden (vgl. M. Gutcho, Capsule Technology and Microencapsulation, Noyes Data Corp., 1972, Seiten 242 - 277). Die primär erhaltenen Mikrokapselsuspensionen enthalten im allgemeinen 10 bis 35 Gew.-% Kapseln. Sie neigen etwas zum Aufrahmen, solange sie kein Bindemittel enthalten. Dies läßt sich für eine Konzentration ausnutzen. Die bevorzugte Kapselgröße liegt um 10 um. Die homogenisierten, mit Binder und gegebenenfalls inerten Füllstoffen, wie Talkum oder Kaolin, versehenen Kapselsuspensionen können manuell mit einem Blumendrahtrakel oder maschinell, beispielsweise mit einer Luftbürste, in Auftragsmengen von 4 - 8 g/m² auf Rohpapier (z. B. von 40 bis 100 g/m²) aufgetragen werden. Die Beschichtung von Rohpapier ist beschrieben in den deutschen Offenlegungsschriften 1 934 457 und 1 955 542. Die so beschichteten Papiere enthalten die erste Farbbildungskomponente; sie werden als Geberpapiere bezeichnet.

Die Geberkomponente ist im allgemeinen bei Durchschreibesätzen die Rückseite des Oberblattes. Die Vorderseite des nächsten Blattes ist mit der zweiten Farbgeberkomponente beschichtet. Man bezeichnet diese Schicht als Nehmerkomponente. Bei Durchschreibesätzen ist die Nehmerkomponente die Oberseite des zweiten Papierblattes. Bei Mehrfachdurchschreibesätzen müssen die folgenden Geberblätter auf der Gegenseite eine Nehmerbeschichtung tragen. Die Herstellung solcher Nehmerschichten ist bekannt und ebenfalls in den deutschen Offenlegungsschriften 1 934 457 und 1 955 542 beschrieben.

### Herstellungsyorschrift A

5,1 Teile 2-Methylindolyl-(3)-phenyläthoxymethan und 2,5 Teile Dimethylanilin werden in 50 Teilen Eisessig und 10 Teilen Essigsäureanhydrid 30 Min. unter Rückfluß gekocht. Der Ansatz wird unter Rühren in 400 Teile Wasser gegossen, der Niederschlag wird abgesaugt, bei 50°C im Vakuum getrocknet und aus Alkohol umkristallisiert. Das farblose Produkt der Formel 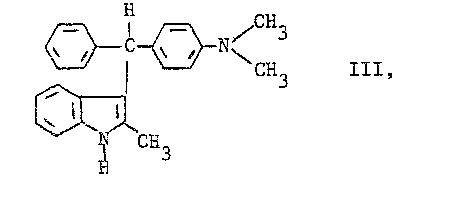 gelöst in Xylol und aufgebracht auf Kieselgel, entwickelt sich an der Luft nach kurzer Zeit zu einem kräftigen Violett.

### Herstellungsvorschrift B

10 Teile des Farbstoffes der Formel 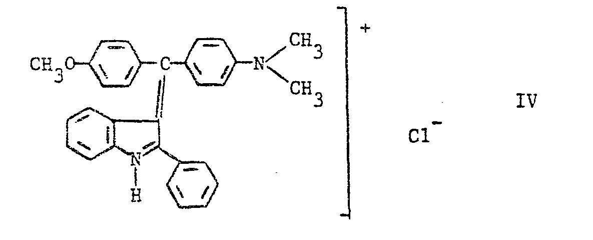 werden in 150 Teilen einer 50%igen Essigsäure gelöst und unter Rühren werden 20 Teile Zinkstaub in kleinen Portionen zugegeben. Es wird auf 70°C erhitzt, 1 Stde. nachgerührt und die farblose Lösung durch Filtration vom überschüssigen Zinkstaub befreit. Das Filtrat wird in 500 Teile Wasser gegossen und mit 50 Teilen konz. Kochsalzlösung gefällt. Der Rückstand wird abgesaugt und mit 200 Teilen 10%igem Ammoniakwasser gewaschen und bei 50°C im' Vakuum getrocknet. Das Produkt hat die Formel

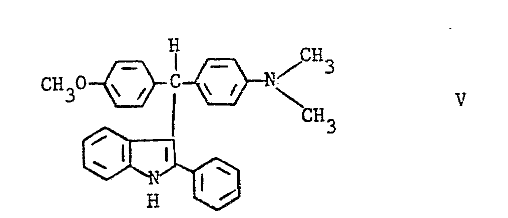

Die Leukoverbindung - gelöst in Xylol - entwickelt sich in Kontakt mit Kieselgel nach einiger Zeit zu einem farbstarken Schwarz.

Entsprechend der in den Herstellungsvorschriften A und B angegebenen Methoden lassen sich die in der folgenden Tabelle aufgeführten Farbbildner herstellen.

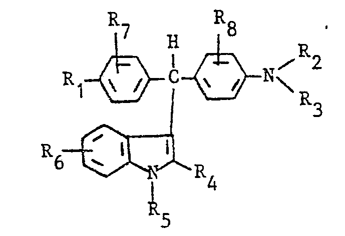

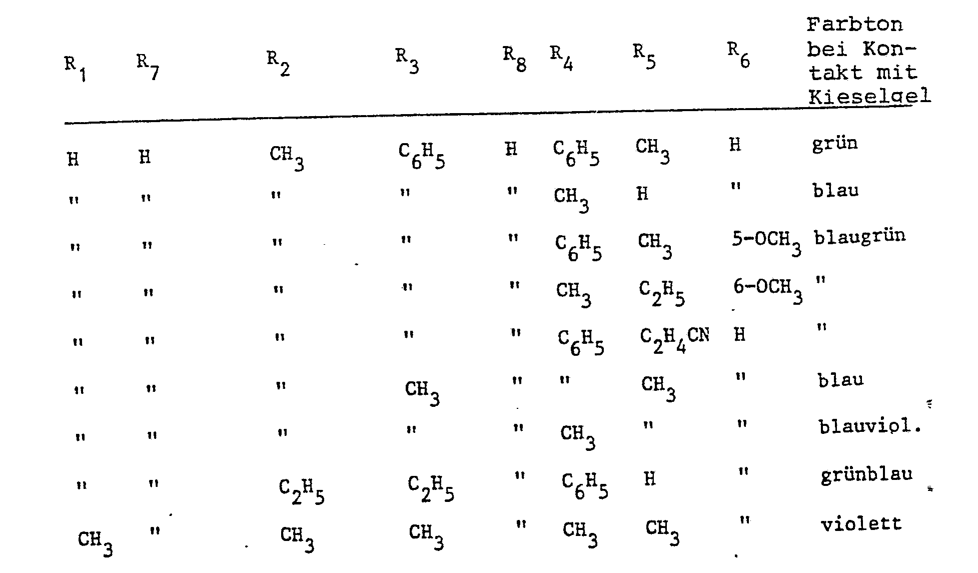

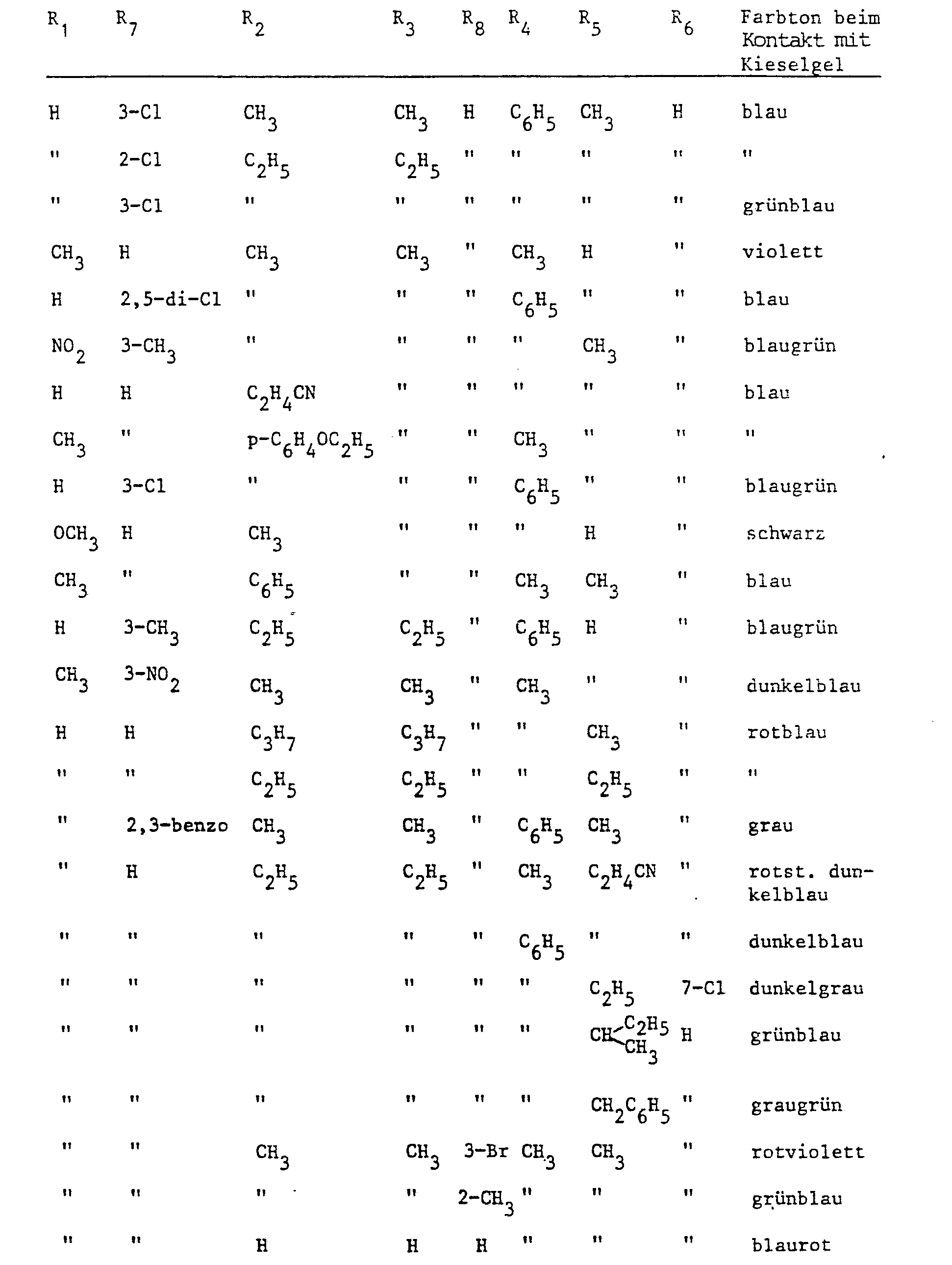

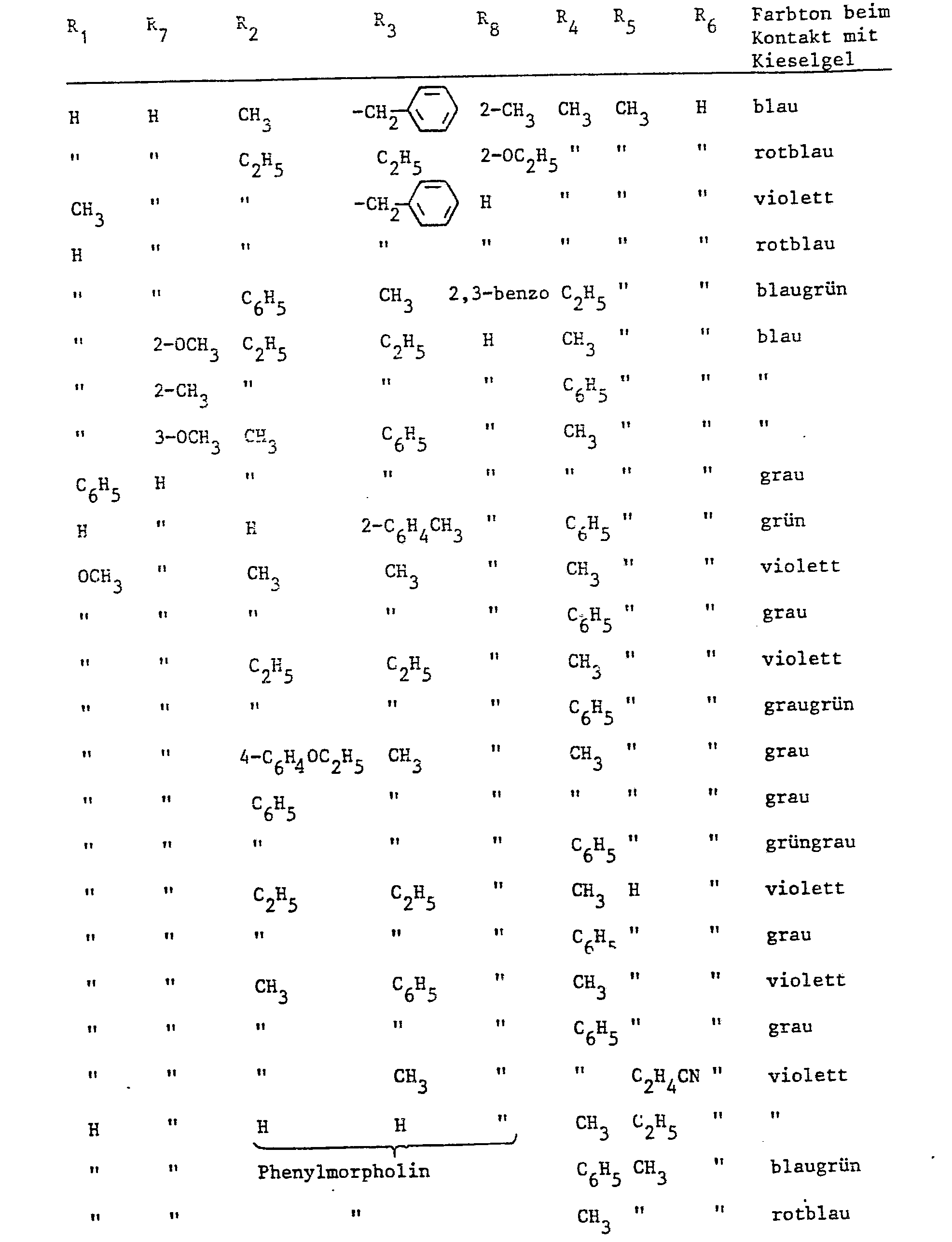

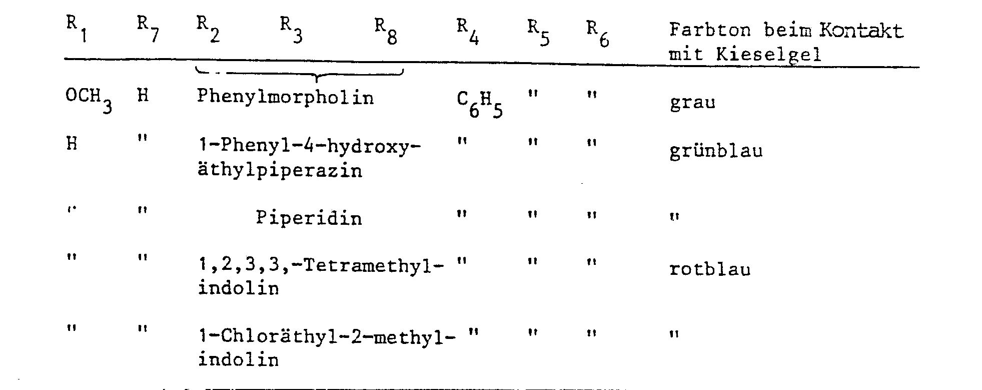

Herstellung von Mikrokapseldispersionen

### Beispiel 1:

6,4 g der Leukoverbindung gemäß Formel V (nach Herstellungsvorschrift B) werden unter Rühren und Erwärmen auf 50°C gelöst und nach Abkühlen auf Raumtemperatur 22,5 g des Oxadiazintriondiisocyanats von Hexamethylendiisocyanat (NCO-Gehalt 21,0 %) unter Rühren zugefügt. Diese organische Lösung wird in 300 g einer 0,5%igen, wäßrigen Lösung eines teilverseiften Polyvinylacetats (Verseifungsgrad 90 %) gegeben und an einer Mischsirene bei 8 900 U/min eine Emulsion mit einer Tröpfchengröfe von. 10 - 12 µm herhestellt. Zu dieser Emulsion werden unter Rühren 2,4 g Diäthylentriamin und 1,3 g Äthylendiamin, gelöst in ,46,3 g Wasser, zugefügt. Die gebildete 30%ige Mikrokapseldispersion wird 1 Stunde bei Raumtemperatur und nach Aufheizen 2 Stunden bei 60°C nachgerührt.

### Beispiel 2:

Es wird wie in Beispiel 1 beschrieben verfahren mit der Abweichung, daß 5 g der Leukoverbindung III (nach Herstellungsvorschrift A) anstelle Leukoverbindung V eingesetzt werden.

### Herstellung von Durchschreibepapieren

### Beispiel 3:

Die im Beispiel 1 hergestellte Mikrokapseldispersion wird mit Wasser auf einen Kapselanteil von 15 Gew.-% verdünnt und mit einem 30 um Drahtrakel auf ein Rohpapier (50 g/m2) aufgestrichen.

Das Papier wird getrocknet und so ein Deckblatt eines kohlefreien Durchschreibepapiers hergestellt.

Eine Probe des Durchschreibepapiers wird mit der mit Mikrokapseln beschichteten Seite auf ein mit sauren Ton beschichtetes, handelsübliches Nehmerpapier ("Giroset CF" der Fa. Feldmühle) gelegt und 7 weitere Papiere aufgelegt. Mit einer Schreibmaschine wird dieser Papierset mit dem Buchstaben "w" beschriftet. Auf dem Nehmerpapier wird ein achter Durchschlag des "w" sichtbar und entwickelt sich unter Lichteinwirkung innerhalb von 24 Stunden zu einem intensiven Schwarzton.

### Beispiel 4:

Es wird, wie in Beispiel 3 beschrieben, ein Durchschreibepapier hergestellt und wie beschrieben beschriftet. Das zu verwendende Nehmerpapier wird auf der beschichteten Seite mit einer gesättigten Kaliumperoxydisulfatlösung getränkt und anschließend getrocknet. Auf dem derartig ausgerüsteten Nehmerpapier entwickelt sich innerhalb von 30 min die Durchschrift zu einem farbintensiven Schwarz.

### Beispiel 5:

Es wird, wie in Beispiel 3 beschrieben, ein Durchschreibepapier hergestellt und beschriftet, mit dem Unterschied, daß die Mikrokapseldispersion des Beispiels 2 zur Herstellung des Durchschreibepapiers verwendet wird. In diesem Falle entwickelt sich die Durchschrift innerhalb von 24 Stunden zu einem intensiven dunkelvioletten Farbton.

## Patentansprüche

1. Druck- und wärmeempfindliches Aufzeichnungsmaterial, dadurch gekennzeichnet, daß es einen Farbbildner der Formel 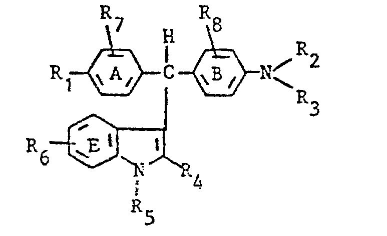 enthält, worin
R₁ Wasserstoff, Hydroxy, C₁- bis C₆-Alkoxy, C₂- bis C₆-Alk^{e-} nyloxy, Cyclohexyloxy, Cyclopentyloxy, gegebenenfalls durch C₁- bis C₄-Alkyl, C₁- bis C₄-Alkoxy oder Halogen substituiertes Benzyloxy, Phenyläthyloxy, Phenyloxy, Naphthyloxy, Phenylthio oder Naphthylthio, C₁- bis C₆-Alkyl- thio,
R₂ und R₃ unabhängig voneinander Wasserstoff, gegebenenfalls durch C₁- bis C₄-Alkoxy C₁- bis C₄-Alkylcarbonyloxy,Hydroxy, Halogen oder Cyan substituiertes C₃- bis C₆-Alkyl, gegebenenfalls durch C₁- bis C₄-Alkyl, C₁- bis C₄-Alkoxy oder Halogen substituiertes Benzyl, Phenyläthyl, Phenyl oder Naphthyl, Cyclopentyl oder Cyclohexyl oder
R₂ und R₃ zusammen mit dem Stickstoffatom einen Pyrrolidin-, Pyrazolin-,Piperidin-oder Morpholinring oder
R₂ zusammen mit dem Stickstoffatom und dem Ring B einen Indolin- oder Tetrahydrochinolinring, wobei die genannten Ringe durch Methyl oder Phenyl substituiert sein können,
R₄ C₁- bis C₄- Alkyl oder Phenyl,
R₅ Wasserstoff, gegebenenfalls durch Cyan, Chlor oder Hydroxy substituiertes C₁- bis C₂₂-Alkyl, C₂- bis C₄-Alkenyl, Cyclohexyl, gegebenenfalls durch Methyl, Äthyl, Methoxy, Äthoxy oder Chlor substituiertes Phenyl oder Benzyl,
R₆,R₇ und R₈ unabhängig voneinander Wasserstoff, Methyl, Äthyl, Methoxy, Äthoxy oder Chlor bedeuten.

2. Aufzeichnungsmaterial gemäß Anspruch 1, dadurch gekennzeichnet, daß es einen Farbbildner der Formel 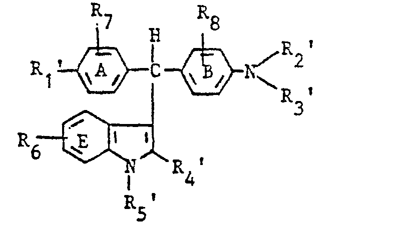 enthält, worin
R₁' für Methyl, Wasserstoff, Phenoxy, Benzyloxy, C₁- bis C₄-Alkoxy steht,
R₂' und R₃' unabhängig voneinander Wasserstoff, C₁- bis C₄- Alkyl, Cyanäthyl, Hydroxyäthyl, Acetoxyäthyl, C₁- bis C₄-Alk- oxyäthyl, gegebenenfalls durch Methyl, Äthyl, Methoxy oder Äthoxy substituiertes Benzyl oder Phenyl bedeuten oder
R₂' und R₃' zusammen mit dem Stickstoffatom einen gegebenenfalls durch Methyl und/oder Phenyl substituierten Pyrrolidin-, Piperidin-,Morpholin-, Pyrazolin- oder Piperazinring bilden,
R₄' für Methyl, Äthyl oder Phenyl und
R₅' für Wasserstoff oder C₁- bis C₄-Alkyl stehen,und
R₆, R₇ und R₈ die Bedeutung des Anspruchs 1 haben.

3. Aufzeichnungsmaterial nach Anspruch 2, dadurch gekennzeichnet, daß R' für Methoxy steht.

4. Aufzeichnungsmaterial nach Anspruch 1, dadurch gekennzeichnet, daß es in mindestens einer Schicht mindestens einen Farbbildner der in Anspruch 1 angegebenen allgemeinen Formel, einen Farbentwickler sowie gegebenenfalls Bindemittel enthält.

5. Aufzeichnungsmaterial nach Anspruch 4, dadurch gekennzeichnet, daß sich mindestens einer der Farbbildner in Mikrokapseln befindet.
